# FASCICULE DE BREVET EUROPEEN

(11) **EP 2 855 900 B1**
(45) Date de publication et mention de la délivrance du brevet: **05.09.2018**
(21) Numéro de dépôt: 13723883.8
(22) Date de dépôt: 26.04.2013
(51) Int. Cl.: F01D 21/14, F01D 21/00, F02C 9/28, F02C 9/48, F02C 9/46

(54) **TURBOMACHINE COMPORTANT UN SYSTÈME DE SURVEILLANCE COMPRENANT UN MODULE D'ENGAGEMENT D'UNE FONCTION DE PROTECTION DE LA TURBOMACHINE ET PROCÉDÉ DE SURVEILLANCE**
TURBOMASCHINE MIT EINEM ÜBERWACHUNGSSYSTEM MIT EINEM MODUL ZUR AUFNAHME EINER SCHUTZFUNKTION DER TURBOMASCHINE UND ÜBERWACHUNGSVERFAHREN
TURBOMACHINE COMPRISING A MONITORING SYSTEM COMPRISING A MODULE FOR ENGAGING A PROTECTION FUNCTION OF THE TURBOMACHINE AND MONITORING METHOD

(30) Priorité: 27.04.2012 FR 1253894
(43) Date de publication de la demande: 08.04.2015
(73) Titulaire: Safran Aircraft Engines, 75015 Paris (FR)
(72) Inventeur: COINTE, Cécile, Valérie, Marie, 77550 Moissy-Cramayel Cedex (FR); DINSART, Michaël, 77550 Moissy-Cramayel Cedex (FR); DJELASSI, Cédrik, 77550 Moissy-Cramayel Cedex (FR); GAULLY, Bruno, Robert, 77550 Moissy-Cramayel Cedex (FR)
(74) Mandataire: Gevers & Orès
(86) Numéro de dépôt international: PCT/FR2013/050934
(87) Numéro de publication internationale: WO 2013/160626

(56) Documents cités:
- EP-A1- 0 471 623
- FR-A1- 2 406 078
- FR-A1- 2 960 906
- GB-A- 2 427 711
- US-A- 3 987 620

## Description

La présente invention concerne le domaine de la surveillance du régime de rotation d'une turbomachine, en particulier, un turboréacteur pour la propulsion d'un aéronef.

Pour un turboréacteur à double corps comportant un corps basse pression et un corps haute pression, il est connu de surveiller le régime de rotation du corps basse pression qui est connu de l'homme du métier sous la désignation de régime N1. La surveillance du régime N1 permet de déclencher plusieurs fonctions de protection du turboréacteur en cas de détection d'une anomalie.

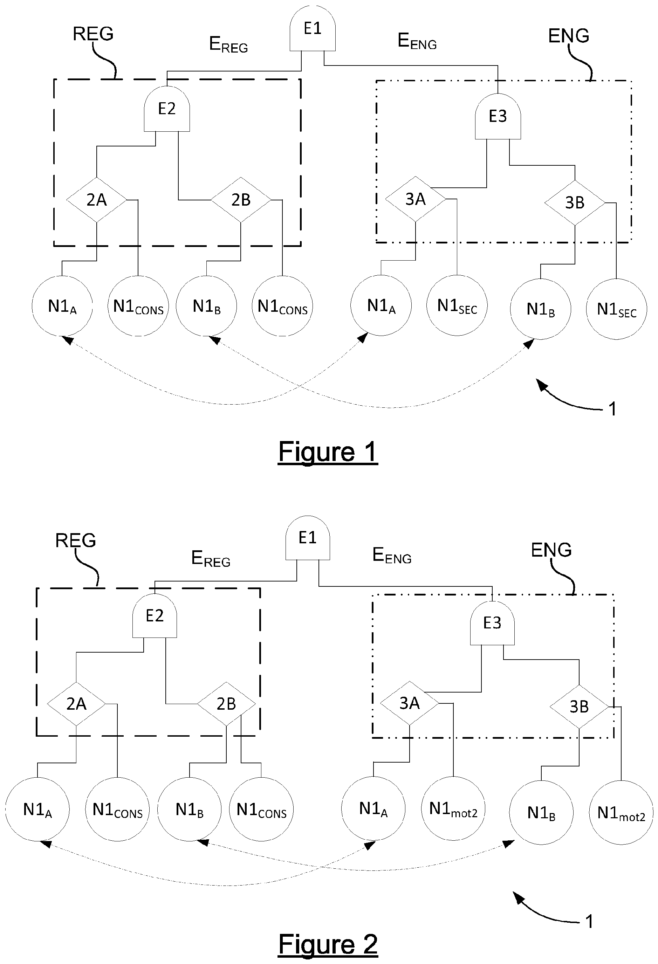

De manière connue, en référence à la figure 1, un turboréacteur comporte un système de surveillance 1 qui comprend un module de régulation REG du régime N1 destiné à réguler le régime du turboréacteur en fonction d'une consigne fournie par le pilote de l'aéronef et un module d'engagement ENG d'une fonction de protection afin de corriger une anomalie de fonctionnement du turboréacteur basée sur le régime N1 du turboréacteur.

En outre, un système de surveillance et de pilotage d'un turboréacteur utilisant des redondances entre unités de calcul est connu de GB 2427711.

### Fonction de protection UHT

Une fonction de protection habituelle est la fonction de protection contre une sur-poussée connue de l'homme du métier sous son abréviation anglaise UHT pour « Uncontrolled High Thrust ». La fonction UHT consiste à couper le débit de carburant du turboréacteur en cas de détection d'une sur-poussée dudit turboréacteur. Cette fonction permet avantageusement d'éviter que la poussée de l'aéronef soit dissymétrique entre deux moteurs de l'aéronef. La fonction de protection UHT est active uniquement lorsque l'aéronef est à basse-altitude/basse-vitesse et inactive en dehors de ce domaine.

De manière classique, en référence à la figure 1, le système de surveillance 1 comporte un module de régulation REG du régime N1 destiné à réguler le régime du turboréacteur N1 en fonction d'une consigne fournie par le pilote de l'aéronef N1_{cons}. Toujours en référence à la figure 1, le module de régulation REG du système de surveillance 1 du turboréacteur comporte une première voie de mesure de régulation A adaptée pour obtenir une mesure N1_{A} du régime N1 et une deuxième voie de mesure de régulation B adaptée pour obtenir une mesure N1_{B} du régime N1. Le module de régulation REG comporte en outre des moyens de comparaison 2A, 2B des mesures de régime obtenues N1_{A}, N1_{B} obtenues sur chacune des voies A, B à la consigne de poussée N1_{cons} définie par le pilote de l'aéronef. Sur la figure 1, une porte logique ET (référence E2) permet de consolider les informations déduites par les moyens de comparaison 2A, 2B afin que le module de régulation REG fournisse en sortie un état de poussée consolidé E_{REG} comme illustré à la figure 1.

A titre d'exemple, si la mesure N1_{A} est égale à 4000 tr/min et la mesure N1_{B} est égale à 5000 tr/min pour une consigne de poussée N1_{cons} égale à 2000 tr/min, les moyens de comparaison 2A, 2B du module de régulation REG déduisent que le turboréacteur est en « sur-poussée » sur chacune des voies de régulation A, B. La porte logique ET (référence E2) en déduit alors que l'état de poussée E_{REG} est égal à « SUR-POUSSEE ».

Comme illustré à la figure 1, le système de surveillance 1 comporte en outre un module d'engagement ENG d'une fonction de protection afin de corriger une anomalie de fonctionnement du turboréacteur basée sur le régime N1 du turboréacteur.

Le module d'engagement ENG de la fonction UHT comporte des moyens de comparaison 3A, 3B qui sont adaptés pour comparer les mesures de régime obtenues N1_{A}, N1_{B} par les voies de mesure de régulation A, B du module de régulation REG à une consigne de sécurité N1_{SEC} afin d'engager la fonction de protection UHT. Sur la figure 1, une porte logique ET (référence E3) permet de consolider les informations déduites par les moyens de comparaison 3A, 3B afin que le module d'engagement ENG fournisse en sortie un état d'activité consolidé E_{ENG} comme illustré à la figure 1. Autrement dit, le module d'engagement ENG de la fonction UHT s'appuie sur les mêmes mesures de régime obtenues N1_{A}, N1_{B} par les voies de mesure de régulation A, B du module de régulation REG pour fournir un état d'activité consolidé E_{ENG} de la fonction de protection UHT.

Ainsi, si la mesure N1_{A} est égale à 4000 tr/min et la mesure N1_{B} est égale à 5000 tr/min pour une consigne de sécurité de N1_{SEC} égale à 3000 tr/min, le module d'engagement ENG de la fonction UHT fournit en sortie un état d'activité E_{ENG} égal à « UHT ACTIF », la fonction UHT devant être engagée.

### Fonction de protection ATTCS

Une autre fonction de protection habituelle est la fonction de protection contre une perte de poussée connue de l'homme du métier sous son abréviation anglaise ATTCS pour « Automatic Take-off Thrust Control System ». La fonction ATTCS consiste à augmenter automatiquement la poussée d'un premier moteur de l'aéronef lorsqu'une perte de poussée ou une accélération insuffisante - conduisant à une perte de poussée - sont détectées sur un deuxième moteur de l'aéronef, dans des phases de vol critiques, par exemple, lors du décollage. Pour permettre la mise en oeuvre de la fonction ATTCS pour un aéronef comportant deux turboréacteurs, une liaison de communication du type ARINC est prévue entre le premier moteur et le deuxième moteur afin de permettre un dialogue croisé. Lors de ce dialogue entre moteurs, le régime N1 du premier moteur est comparé au régime N1 du deuxième moteur (référencé N1ₘₒₜ₂).

Par souci de clarté, les références de la figure 1 utilisées pour la description de la fonction UHT sont reprises à la figure 2 pour la description de la fonction ATTCS lorsqu'il n'y a pas d'incompatibilité. En référence à la figure 2, le module d'engagement ENG de la fonction ATTCS du système de surveillance du turboréacteur comporte des moyens de comparaison 3A, 3B qui comparent les mesures de régime N1_{A}, N1_{B} obtenues par les voies de mesure de régulation A, B du module de régulation REG au régime N1ₘₒₜ₂ du deuxième moteur pour engager la fonction de protection ATTCS. Une porte logique ET (référence E3) permet de consolider les informations déduites par les moyens de comparaison 3A, 3B afin que le module d'engagement ENG fournisse en sortie un état d'activité consolidé E_{ENG} comme illustré à la figure 2.

### Fiabilité du système de surveillance

Pour vérifier la fiabilité du système de surveillance 1, il est nécessaire de s'assurer que les fonctions de protection du type UHT ou ATTCS sont correctement engagées et, ce, même en cas de dysfonctionnement de certains composants du système de surveillance 1. Il est connu de relever les évènements redoutés qui conduisent à un dysfonctionnement de l'engagement desdites fonctions UHT et ATTCS. Les évènements redoutés sont définis dans une norme connue de l'homme du métier sous la désignation de CS-25.

Parmi les événements les plus redoutés, on relève dans la norme CS-25 des évènements correspondants à :
- une perte de poussée sur le premier moteur (E_{REG}=SOUS-POUSSEE) et un non engagement de la fonction ATTCS sur le deuxième moteur (E_{ENG} =ATTCS INACTIF) ; et
- une sur-poussée (E_{REG}=SUR-POUSSEE) et un non engagement de la fonction UHT (E_{ENG}=UHT INACTIF).

A titre d'exemple, l'événement « perte de poussée sur le premier moteur et un non engagement de la fonction ATTCS sur le deuxième moteur » est représenté sur la figure 2. L'événement redouté, référencé E1, ne survient que si, de manière cumulative, une perte de poussée est détectée sur le premier moteur (E_{REG}=SOUS-POUSSEE) et la fonction ATTCS n'est pas engagée sur le deuxième moteur (E_{ENG} =ATTCS INACTIF).

A titre d'exemple d'événement redouté, si la valeur réelle du régime N1 est égale à 1000 tr/min, si la mesure N1_{A} est égale à 4000 tr/min et que la mesure N1_{B} est absente pour une consigne de poussée N1_{cons} égale à 2000 tr/min, les moyens de comparaison 2A, 2B du module de régulation REG déduisent que le turboréacteur est en « sur-poussée ». Du fait de la valeur erronée haute de la mesure N1_{A} de la voie de régulation A, l'état de poussée E_{REG} est faux. En ce qui concerne le module d'engagement ENG, pour une consigne de régime de N1_{MOT2} égale à 2000 tr/min, comme la mesure N1_{A} de la voie de régulation A est erronée haute, le module d'engagement ENG de la fonction ATTCS fournit en sortie un état d'activité E_{ENG} égal à « ATTCS INACTIF » alors que le moteur est en sous-poussée.

Autrement dit, la perte de poussée (E_{REG}=SOUS-POUSSEE) ne survient que si, de manière cumulative, la première voie de mesure de régulation A du premier moteur fournit une information régime N1 erronée - N1_{A} erroné - et la deuxième voie mesure B du premier moteur ne fournit pas d'information ou une information de régime N1 erronée - N1_{B} absent ou erroné -. Ainsi, un état de poussée incorrect E_{REG} ne survient qu'en cas d'accumulation de deux dysfonctionnements simultanés sur chacune des voies de mesure de régulation A, B. De même, la fonction ATTCS n'est pas engagée sur le deuxième moteur (E_{ENG} =ATTCS INACTIF) si, de manière cumulative, les deux voies de mesure de régulation A, B du deuxième moteur reçoivent du premier moteur un régime N1_{A} et N1_{B} erronés. Ainsi, si les voies de mesure de régulation A, B fournissent simultanément des données erronées, l'état de poussée E_{REG} et l'état d'activité de la fonction E_{ENG} sont incorrects étant donné que les voies de mesure de régulation A, B fournissent des valeurs de régime aux deux modules REG, ENG du système de surveillance 1.

En pratique, l'apparition des évènements les plus redoutés est extrêmement rare du fait qu'il correspond à l'apparition simultanée d'un dysfonctionnement du module de régulation REG et du dysfonctionnement du module d'engagement ENG. En outre, comme présenté précédemment, le système de surveillance 1 comporte deux voies de mesure de régulation A, B e qui permet d'augmenter de manière importante la fiabilité du système de surveillance. Ainsi, une simple défaillance isolée d'un composant ne permet pas d'affecter le système de surveillance 1 du turboréacteur aussi bien pour l'engagement de la fonction UHT (Figure 1) que pour l'engagement de la fonction ATTCS (Figure 2).

### Fiabilité du système de surveillance en mode « dispatch »

Pour les nouvelles générations d'aéronefs, il a été proposé de permettre le vol des aéronefs même quand ce dernier comporte un calculateur ayant une voie de mesure de régulation défectueuse. Ce mode de fonctionnement est connu de l'homme du métier comme « configuration dégradée » ou « mode dispatch ». Dans l'art antérieur, le mode de fonctionnement « dispatch » n'était pas autorisé ce qui engendrait des inconvénients pour les passagers de l'aéronef qui se trouvaient alors immobilisés au sol en attente de réparation alors qu'aucun composant vital du moteur n'était en panne, seule une voie de mesure étant défectueuse.

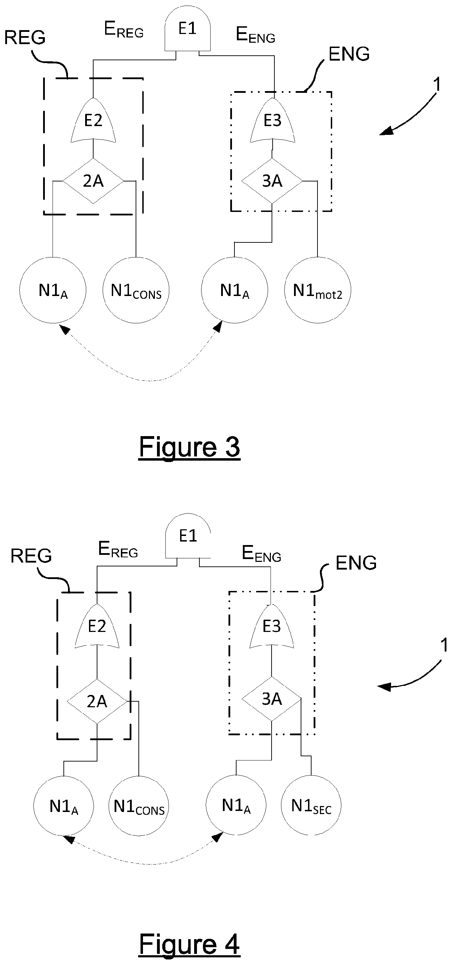

En mode « dispatch », la fiabilité du système de surveillance 1 est affectée. A titre d'exemple, il a été représenté à la figure 3 un arbre de fiabilité pour l'engagement de la fonction ATTCS lorsque la voie de mesure de régulation B est en panne et ne fournit plus de données. De manière similaire à la figure 2, l'événement redouté E1 ne survient que si, de manière cumulative, une perte de poussée est détectée sur le premier moteur (E_{REG}=SOUS-POUSSEE) et la fonction ATTCS n'est pas engagée sur le deuxième moteur (E_{ENG} =ATTCS INACTIF). Comme illustré sur la figure 3, la voie de mesure de régulation B étant en panne, la surveillance ne repose que sur la voie de mesure de régulation A du premier moteur.

A titre d'exemple, la perte de poussée (E_{REG}=SOUS-POUSSEE) peut survenir si la première voie de mesure de régulation A du premier moteur fournit un régime erroné N1_{A}, par exemple, N1_{A} est une surestimation du régime N1 réel du turboréacteur comme présenté précédemment. L'état de poussée E_{REG} obtenu par le module de régulation REG ne dépend alors que d'un dysfonctionnement isolé. Toujours en référence à la figure 3, comme la valeur N1_{A} fournie par le premier moteur est erronée, la fonction ATTCS n'est pas engagée. La fiabilité est ainsi fortement compromise en mode « dispatch », une simple valeur erronée pouvant conduire à un évènement redouté de la fonction de protection ATTCS. Il en va de même pour la fonction UHT (Figure 4).

Une solution immédiate pour éliminer cet inconvénient serait d'autoriser un engagement manuel des fonctions de protection par le pilote de l'aéronef. Cependant, cette solution n'est pas envisagée par les avionneurs qui souhaitent un engagement automatique des fonctions de protection. Une autre solution immédiate serait d'ajouter des voies de mesure de régulation mais cette solution augmente les coûts de fabrication et de maintenance du système de surveillance ce qui n'est également pas souhaité.

Afin d'éliminer au moins certains de ces inconvénients, l'invention concerne une turbomachine d'aéronef comportant au moins un corps rotatif de régime N1 et un système de surveillance comprenant :
- un module de régulation comportant au moins une première voie de mesure de régulation adaptée pour obtenir une mesure du régime N1 et une deuxième voie de mesure de régulation, indépendante de la première voie de mesure, adaptée pour obtenir une mesure du régime N1, et des moyens de comparaison de la mesure de régime obtenue à une consigne de poussée pour fournir un état de poussée ; et
- un module d'engagement d'une fonction de protection du type UHT ou ATTCS de la turbomachine,
la turbomachine comportant en outre un système de protection contre la survitesse pour empêcher l'envoi de débris à haute énergie en dehors de ladite turbomachine, le système de protection comportant au moins une voie de mesure de survitesse adaptée pour obtenir une survitesse du corps rotatif de la turbomachine, turbomachine comportant des moyens aptes à fournir au moins une mesure de survitesse à partir de la survitesse obtenue lorsqu'une des voies de mesures de régulation est défectueuse, et dans laquelle le module d'engagement comporte au moins un moyen de comparaison de ladite mesure de survitesse à au moins un régime de référence déterminé en fonction de la fonction de protection à engager, ledit module d'engagement étant configuré pour engager ladite fonction de protection en fonction des résultats de la comparaison.

Ainsi, selon l'invention, le module d'engagement d'une fonction de protection du type UHT ou ATTCS ne décide pas de l'engagement de la fonction de protection à partir d'une mesure de régime obtenue sur une voie de régulation comme dans l'art antérieur mais à partir d'une mesure de survitesse obtenue sur une voie de mesure de survitesse d'un système de protection contre la survitesse pour empêcher l'envoi de débris à haute énergie en dehors de ladite turbomachine. Comme la mesure de survitesse est indépendante utilisée par le système de protection est indépendante de celle du système de surveillance, un dysfonctionnement d'une mesure sur une voie de régulation n'a pas de conséquence sur le module d'engagement de la fonction de protection. Autrement dit, la régulation de la poussée et l'engagement de la fonction de protection sont indépendantes ce qui améliore la fiabilité du système de surveillance. De plus le module d'engagement fonctionne de manière indépendante du module de régulation. Il peut donc engager sa fonction de protection à partir des mesures de survitesse indépendamment du module de régulation.

Le module de régulation comporte en outre deux voies de mesures indépendantes redondées afin d'augmenter la fiabilité de la régulation de poussée, ce qui permet d'envisager un fonctionnement de la turbomachine en mode « dispatch », lorsqu'une des deux voies de mesure est défectueuse. D'après les caractéristiques des mesures de survitesse et du module d'engagement, un dysfonctionnement sur la seule voie de mesure de régulation ne peut pas entraîner un dysfonctionnement pour l'engagement de la fonction de protection. La probabilité d'un évènement redouté est extrêmement faible en mode « dispatch ».

Dans une première variante de réalisation, le système de protection contre la survitesse comporte une première voie de détection de survitesse adaptée pour obtenir une survitesse du corps rotatif de la turbomachine et une deuxième voie de détection de survitesse, indépendante de la première voie de détection de survitesse, adaptée pour obtenir une survitesse du corps rotatif de la turbomachine, le module d'engagement comportant des moyens de comparaison des deux survitesses obtenues au régime de référence déterminé en fonction de la fonction de protection à engager. Ainsi, quelques soient les liens des voies de mesures de survitesse avec les voies de mesure de régulation, il y a toujours en mode dispacth au moins une mesure de survitesse disponible pour le fonctionnement du module d'engagement ne mode dispatch..

Dans une deuxième variante de réalisation, le système de protection contre la survitesse comporte une première voie de détection de survitesse adaptée pour obtenir une survitesse du corps rotatif de la turbomachine et une deuxième voie de détection de survitesse, indépendante de la première voie de détection de survitesse, adaptée pour obtenir une survitesse du corps rotatif de la turbomachine et il est configuré pour fournir une survitesse consolidée au module d'engagement du système de surveillance en fonction des survitesses obtenues sur les voies de mesure de survitesse. Le module d'engagement comporte, quant à lui, des moyens de comparaison de la survitesse consolidée au régime de référence déterminé en fonction de la fonction de protection à engager. Cette variante fonctionne comme la première par rapport au mode « dispatch ». De plus, la consolidation de la survitesse transmise au module d'engagement permet avantageusement d'éviter la transmission d'une survitesse erronée acquise sur uniquement une seule voie de mesure. Lors de la consolidation, les deux survitesses obtenues de manière indépendante sont comparées afin de vérifier leur vraisemblance.

Dans une troisième variante de réalisation, la voie de mesure de survitesse est indépendante de la voie de mesure de régime. Cette variante peut fonctionner pour le mode « dispatch » avec une seule voie de mesure de survitesse puisque dans ce cas, la défectuosité d'une voie de mesure de régulation n'affecte pas la voie de mesure de survitesse. Elle peut aussi combinée avec les eux autres variantes puisqu'elle ajoute des redondances supplémentaires.

Selon un aspect de l'invention, pour l'engagement de la fonction UHT de la turbomachine, les moyens de comparaison du module d'engagement sont configurés pour comparer au moins une survitesse obtenue à un régime de sécurité correspondant à la sur-poussée maximale autorisée pour la turbomachine. La décision d'engagement de la fonction UHT est indépendante du module de régulation de poussée. Si la survitesse excède le régime de sécurité, la fonction UHT est engagée et l'alimentation en carburant de la turbomachine est coupée.

Selon un autre aspect de l'invention, la turbomachine comprend au moins une liaison de communication avec une autre turbomachine similaire pour se communiquer la valeur du régime de leur corps rotatif, turbomachine dans laquelle, pour l'engagement de la fonction ATTCS de ladite turbomachine, les moyens de comparaison du module d'engagement sont configurés pour comparer au moins une survitesse obtenue de ladite turbomachine au régime de ladite autre turbomachine obtenue par la liaison de communication. La fonction ATTCS permet de comparer les régimes de rotation des corps rotatifs des deux turbomachines afin de détecter une éventuelle dissymétrie de poussée. Comme la régulation est indépendante de la fonction de protection ATTCS, la fiabilité de la surveillance de la turbomachine est accrue.

L'invention concerne en outre un procédé de surveillance d'une turbomachine d'aéronef comportant au moins un corps rotatif de régime N1, procédé comportant :
- une étape d'obtention d'une première mesure du régime du corps rotatif selon une première voie de mesure de régulation d'un système de surveillance du régime N1 et d'au moins une deuxième mesure du régime du corps rotatif selon une deuxième voie de mesure de régulation dudit système de surveillance, indépendante de la première voie de mesure ;
- une étape de comparaison de ladite mesure de régime obtenue à une consigne de poussée pour fournir un état de poussée ;
- une étape d'obtention d'une première survitesse du corps rotatif selon une première voie de détection de survitesse d'un système de protection contre la survitesse adapté pour empêcher l'envoi de débris à haute énergie en dehors de ladite turbomachine, et d'une seconde survitesse du corps rotatif de la turbomachine selon une deuxième voie de détection de survitesse du même système de protection, indépendante de la première voie de détection de survitesse , et
- une étape d'engagement d'une fonction de protection « anti sur-poussée » ou « anti perte de poussée » de la turbomachine utilisant les deux valeurs de survitesse obtenues pour comparer la mesure de survitesse à au moins un régime de référence déterminé en fonction de la fonction de protection à engager.

Dans une variante de réalisation du procédé comportant les deux première étapes précitées, les deux dernière étapes citées dans la première variante sont remplacées par :
- une étape d'obtention d'une survitesse du corps rotatif selon au moins une voie de mesure de survitesse, indépendante des voies de mesure de régulation, d'un système de protection contre la survitesse adapté pour empêcher l'envoi de débris à haute énergie en dehors de ladite turbomachine, et
- une étape d'engagement d'une fonction de protection « anti sur-poussée » ou « anti perte de poussée » de la turbomachine par comparaison de ladite survitesse obtenue à au moins un régime de référence déterminé en fonction de la fonction de protection à engager.

L'invention sera mieux comprise à la lecture de la description qui va suivre, donnée uniquement à titre d'exemple, et se référant aux dessins annexés sur lesquels :
- la figure 1 est une représentation schématique de la fiabilité d'un système de surveillance d'un turboréacteur pour l'engagement d'une fonction UHT selon l'art antérieur (déjà commentée) ;
- la figure 2 est une représentation schématique de la fiabilité d'un système de surveillance d'un turboréacteur pour l'engagement d'une fonction ATTCS selon l'art antérieur (déjà commentée) ;
- la figure 3 est une représentation schématique de la fiabilité d'un système de surveillance d'un turboréacteur pour l'engagement d'une fonction ATTCS selon l'art antérieur en mode « Dispatch » (déjà commentée) ;
- la figure 4 est une représentation schématique de la fiabilité d'un système de surveillance d'un turboréacteur pour l'engagement d'une fonction UHT selon l'art antérieur en mode « Dispatch (déjà commentée) ;
- la figure 5 est une représentation schématique de la fiabilité d'un système de surveillance d'un turboréacteur pour l'engagement d'une fonction UHT selon l'invention ;
- la figure 6 est une représentation schématique de la fiabilité d'un système de surveillance d'un turboréacteur pour l'engagement d'une fonction UHT selon l'invention en mode « Dispatch » ;
- la figure 7 est une représentation schématique de la fiabilité d'un système de surveillance d'un turboréacteur pour l'engagement d'une fonction ATTCS selon l'invention ;
- la figure 8 est une représentation schématique de la fiabilité d'un système de surveillance d'un turboréacteur pour l'engagement d'une fonction ATTCS selon l'invention en mode « Dispatch » ; et
- la figure 9 est une représentation schématique d'un système de surveillance d'un turboréacteur pour l'engagement d'une fonction UHT ou ATTCS selon l'invention en mode « Dispatch ».

Il faut noter que les figures exposent l'invention de manière détaillée pour mettre en oeuvre l'invention, lesdites figures pouvant bien entendu servir à mieux définir l'invention le cas échéant.

L'invention va être présentée pour un turboréacteur à double corps mais elle s'applique à toute turbomachine d'aéronef comportant au moins un corps rotatif.

Dans cet exemple, le turboréacteur à double corps comporte un corps basse pression et un corps haute pression, le régime de rotation du corps basse pression étant connu de l'homme du métier sous la désignation de régime N1. Comme présenté précédemment, la surveillance du régime N1 permet de déclencher plusieurs fonctions de protection du turboréacteur en cas de détection d'une anomalie.

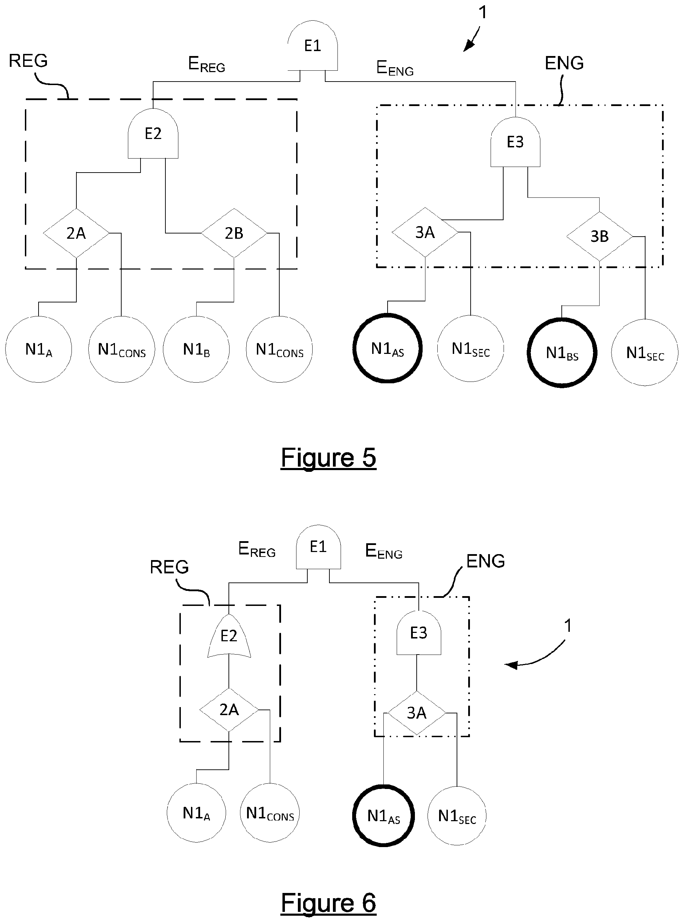

Comme illustré sur les figure 5 à 8, le turboréacteur comporte un système de surveillance 1 qui comprend un module de régulation REG du régime N1 destiné à réguler le régime du turboréacteur en fonction d'une consigne N1_{CONS} fournie par le pilote de l'aéronef et un module d'engagement ENG d'une fonction de protection afin de corriger une anomalie de fonctionnement du turboréacteur basée sur le régime N1 du turboréacteur.

### Module de régulation REG du régime N1

Le module de régulation REG du système de surveillance 1 est un module de régulation similaire à l'art antérieur qui comporte une première voie de mesure de régulation A adaptée pour obtenir une mesure N1_{A} du régime N1 et une deuxième voie de mesure de régulation B adaptée pour obtenir une mesure N1_{B} du régime N1.

Le module de régulation REG du système de surveillance 1 comporte en outre des moyens de comparaison 2A, 2B des mesures de régime obtenues N1_{A}, N1_{B} à une consigne de poussée N1_{cons} pour fournir en sortie un état de poussée E_{REG} du turboréacteur. Comme représenté sur les figures 5 à 8, une porte logique ET (référence E2) permet de consolider les informations déduites par les moyens de comparaison 2A, 2B

A titre d'exemple, si la consigne de poussée N1_{cons} est égale à 4 000 tr/min et que les mesures de régime obtenues N1_{A}, N1_{B} sont respectivement égales à 2 000 tr/min et 1000 tr/min, le module de régulation REG fournit un état de poussée E_{REG} indiquant une perte de poussée du turboréacteur. Si uniquement la voie de mesure de régulation A avait indiqué une perte de poussée, l'état de poussée E_{REG} n'aurait pas indiqué de perte de poussée (porte ET entre les deux voies A, B).

De manière classique, chaque voie de mesure de régulation A, B comporte ses propres moyens d'acquisitions et ses propres capteurs de régime. Le module de régulation REG se présente classiquement sous la forme d'un calculateur de régulation, du type FADEC, monté sur le turboréacteur.

### Module d'engagement d'une fonction de protection

Selon l'invention, le module d'engagement ENG d'une fonction de protection, du type UHT ou ATTCS, est indépendant des voies de mesure de régulation A, B du module de régulation REG. En effet, selon l'invention, l'engagement de la fonction de protection dépend de mesures de survitesse du corps rotatif du turboréacteur afin d'éviter l'envoi de débris à haute énergie en dehors du turboréacteur et, en particulier, vers l'aéronef sur lequel est monté le turboréacteur.

De manière classique, la protection contre la survitesse est mise en oeuvre par un système de protection électronique qui est indépendant du système de surveillance 1 permettant la régulation et l'engagement des fonctions de protection UHT et ATTCS. Un système de protection contre la survitesse est par exemple connu de la demande de brevet d'invention FR2960906 de la société SNECMA.

De manière connue, la survitesse du corps basse pression du turboréacteur est détectée par une première voie de détection de survitesse AS et par une deuxième voie de détection de survitesse BS pour empêcher l'envoi de débris à haute énergie en dehors du turboréacteur. De manière classique, chaque voie de détection de survitesse AS, BS comporte ses propres moyens d'acquisition et ses propres capteurs de régime. Les voies de détection de survitesse AS, BS sont respectivement adaptées pour obtenir des survitesses N1_{As}, N1_{Bs} du corps rotatif de la turbomachine comme illustré sur les figures 5 à 8.

Selon l'invention, les voies de détection de survitesse AS, BS du système de protection de survitesse sont reliées au module d'engagement ENG d'une fonction de protection. Ainsi, les survitesses N1_{AS}, N1_{BS,} qui sont des valeurs du régime de rotation du corps basse pression, servent de base à l'engagement de la fonction de protection et sont indépendantes du régime N1_{A}, N1_{B} obtenu pour le module de régulation REG ce qui augmente la fiabilité du système de surveillance 1.

De manière classique, le module d'engagement ENG comporte des moyens de comparaison 3A, 3B qui sont adaptés pour comparer les survitesses obtenues N1_{AS,} N1_{BS} à au moins un régime de référence qui est déterminé en fonction de la fonction de protection à engager (UHT, ATTCS) comme cela sera présenté par la suite

### Engagement d'une fonction de protection UHT

Pour l'engagement de la fonction de protection UHT, en référence tout d'abord à la figure 5, les survitesses obtenues N1_{AS,} N1_{BS} par le système de protection de survitesse sont chacune comparées à une consigne de sécurité N1_{SEC} à partir de laquelle la fonction de protection UHT est engagée. La consigne de sécurité N1_{SEC} pour la fonction UHT est similaire à celle utilisée dans l'art antérieur et correspond au régime maximal autorisé par le turboréacteur avant que la fonction UHT ne soit activée. Lorsque la fonction UHT est activée, l'alimentation en carburant du turboréacteur est coupée.

Comme illustré à la figure 5, lorsqu'une sur-poussée est détectée par le module d'engagement ENG par comparaison des survitesses N1_{AS,} N1_{BS} à la consigne de sécurité N1_{SEC}, la fonction de protection UHT est engagée (E_{ENG}= UHT ACTIF) afin d'éviter une dissymétrie de poussée de l'aéronef. Comme la décision d'engagement de la fonction de protection UHT est indépendante du module de régulation REG, la fiabilité du système de surveillance 1 est améliorée. De manière incidente, la fonction de protection UHT peut être engagée alors que l'état de poussée E_{REG} n'indique pas de sur-poussée.

A titre d'exemple, en référence à la figure 6, toutes les voies B du système de surveillance sont en panne en mode « dispatch », c'est-à dire, aussi bien la voie de mesure de régulation B que la voie de mesure de survitesse BS. Grâce au système de surveillance 1 de l'invention, les modules de régulation REG et d'engagement ENG disposent d'informations de régime N1 indépendantes pour définir les états de poussée et d'activité de la fonction UHT ce qui améliore la fiabilité du système de surveillance 1, une panne isolée ne pouvant pas conduire à un évènement redouté comme illustré à la figure 6.

### Engagement d'une fonction de protection ATTCS

Dans l'exemple de réalisation qui va suivre, un premier turboréacteur et un deuxième turboréacteur selon l'invention sont montés sur un aéronef. Chaque turboréacteur comporte au moins une liaison de communication avec l'autre turboréacteur de manière à permettre un dialogue entre les turboréacteurs. La liaison de communication permet de communiquer la valeur du régime N1 du corps rotatif à l'autre turboréacteur de manière à ce que la fonction ATTCS puisse corriger toute dissymétrie de poussée. Dans cet exemple, les deux turboréacteurs sont reliés par une liaison de communication du type ARINC mais il va de soi que d'autres moyens de communication pourraient convenir.

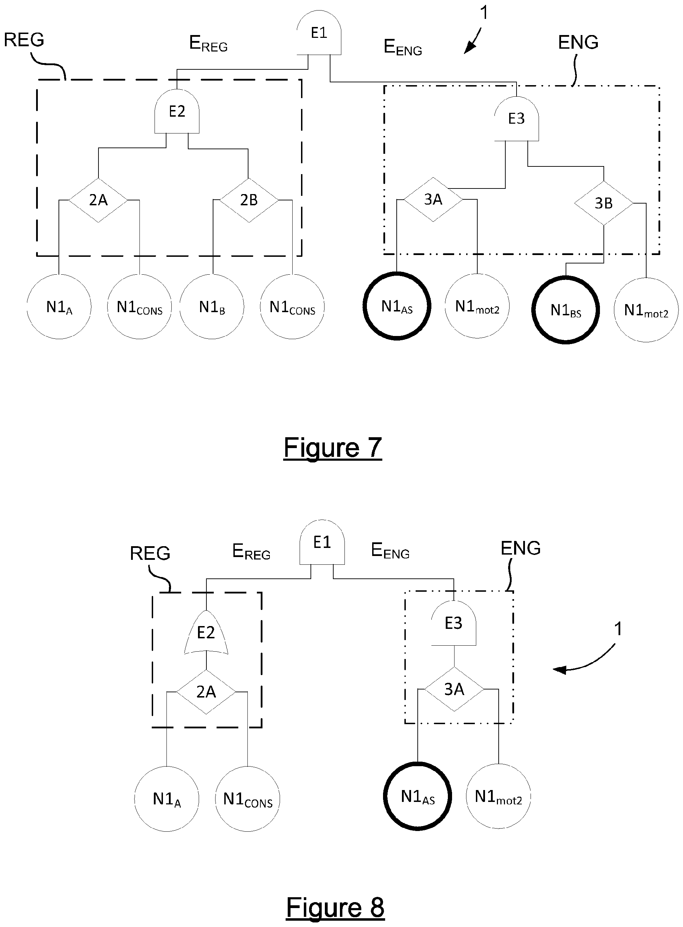

Chaque turboréacteur comporte un système de protection de survitesse et un système de surveillance 1 avec son propre module de régulation REG et son propre module d'engagement ENG. En référence à la figure 7, pour l'engagement de la fonction de protection ATTCS sur le premier turboréacteur, les survitesses obtenues N1_{AS,} N1_{BS} du premier turboréacteur sont chacune comparées à un régime de référence qui correspond au régime consolidé N1ₘₒₜ₂ du module de régulation REG du deuxième turboréacteur. Dans cet exemple, le régime consolidé N1ₘₒₜ₂ est obtenu par traitement des régimes mesurés par les voies de mesure de régulation A, B du module de régulation REG du deuxième turboréacteur.

Autrement dit, le premier turboréacteur dispose de la valeur du régime de rotation N1ₘₒₜ₂ du corps basse pression du deuxième turboréacteur. Comme illustré à la figure 7, grâce aux moyens de comparaison 3A, 3B des régimes des turboréacteurs, on peut alors détecter une dissymétrie de poussée entre les deux turboréacteurs. De manière similaire à l'engagement de la fonction UHT, grâce au système de surveillance de l'invention 1, les modules de régulation REG et d'engagement ENG disposent d'informations de régime N1 indépendantes pour définir les états de poussée et d'activité de la fonction ATTCS ce qui améliore la fiabilité du système de surveillance 1, une panne isolée ne pouvant pas conduire à un évènement redouté. Il en va de même pour l'engagement de la fonction ATTCS en mode « dispatch » comme représenté à la figure 8.

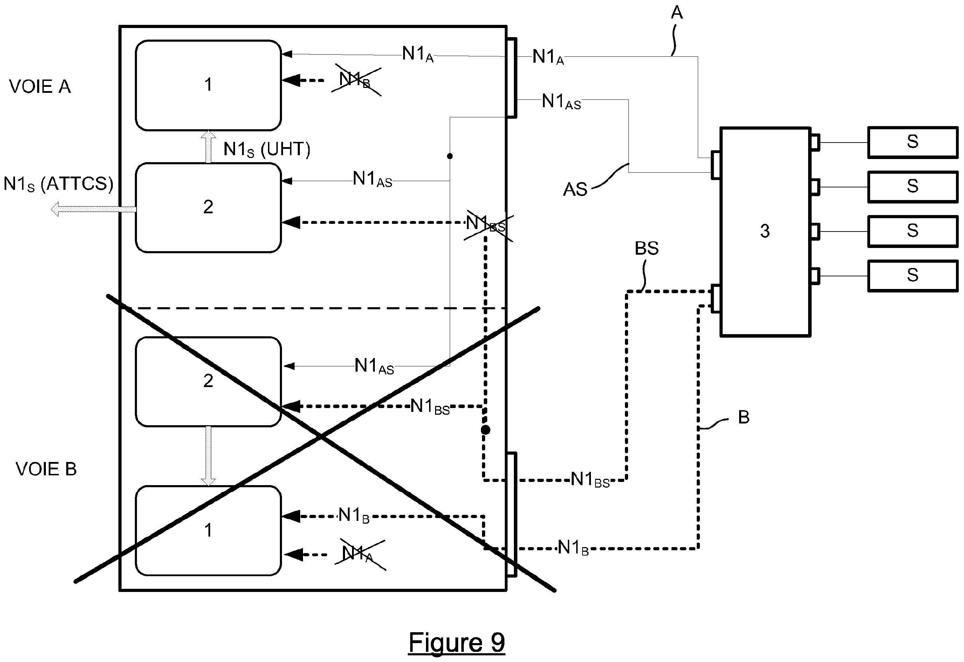

Un dispositif électronique pour la surveillance de l'aéronef est représenté de manière schématique sur la figure 9. Ce dispositif électronique se présente sous la forme d'un calculateur, par exemple du type FADEC, et comprend un système de surveillance 1 et un système de protection 2. Par souci de clarté, les voies A du système de surveillance 1 sont représentées dans la partie supérieure du calculateur tandis que les voies B du système de surveillance 1 sont représentées dans la partie inférieure du calculateur.

Le calculateur reçoit en entrée des mesures de régime N1_{A}, N1_{B} par les voies de mesures de régulation A, B et des mesures de survitesses N1_{AS}, N1_{BS} par les voies de mesures de survitesses AS, BS comme illustré sur la figure 9. Ces mesures de régime et de survitesse sont réalisées par des capteurs de mesure S par l'intermédiaire d'un système d'acquisition 3, par exemple, un dispositif FPGA pour « field-programmable gate array ». Les capteurs de mesure S et le système d'acquisition 3 sont configurés de manière à ce que les mesures de régime N1_{A}, N1_{B} et de survitesse N1_{AS}, N1_{BS} soient réalisées de manière indépendante.

Le calculateur de la figure 9 est représenté en mode « dispatch », l'ensemble des voies de mesure B étant en panne. La panne est représentée visuellement par une croix venant barrer la partie inférieure du calculateur. Du fait de la panne, le système de surveillance 1 ne reçoit pour son module de régulation REG qu'une unique mesure de régime N1_{A}, la mesure de régime N1_{B} étant absente. Le système de surveillance 1 ne reçoit pour son module d'engagement ENG qu'une unique mesure de survitesse N1_{S} du système de protection 2 qui est ici égale à la mesure de survitesse N1_{AS} mesurée sur la voie A du système de protection 2, la mesure de régime N1_{BS} étant absente du fait de la panne.

Toujours en référence à la figure 9, les mesures de régime N1_{A} et de survitesse N1_{AS} sont reçues par le système de surveillance 1. Comme présenté précédemment, le module de régulation REG du système de surveillance 1 compare la mesure de régime N1_{A} à un régime de consigne N1_{CONS} non représenté sur la figure 9. Le module d'engagement ENG du système de surveillance 1 compare la survitesse N1_{S} - fournie par le système de protection 2 - à une consigne de sécurité N1_{SEC} pour l'engagement de la fonction UHT non représenté sur la figure 9. En ce qui concerne la fonction ATTCS, la survitesse N1_{S} fournie par le système de protection 2 est comparée au régime du corps rotatif d'une autre turbomachine. De manière réciproque, en référence à la figure 9, le système de protection 2 transmet la valeur de survitesse N1_{S} au deuxième turboréacteur par la liaison de communication de manière à ce que le deuxième turboréacteur puisse également mettre en oeuvre la fonction ATTCS.

Grâce à l'invention, la fiabilité du système de surveillance est accru en toutes circonstances, en particulier, en mode « dispatch » ce qui procure une plus grande sécurité du turboréacteur et une meilleure disponibilité de l'aéronef sur lequel est monté le turboréacteur.

De préférence, le système de surveillance 1 et le système de protection 2 sont des systèmes électroniques qui sont de préférence indépendants mais il va de soi qu'ils pourraient être rassemblés au sein d'un même calculateur. De manière similaire, les modules d'engagement et de régulation sont également des modules électroniques.

## Revendications

1. Turbomachine d'aéronef comportant au moins un corps rotatif de régime N1 et un système de surveillance (1) comprenant :
- un module de régulation (REG) comportant au moins une première voie de mesure de régulation (A) adaptée pour obtenir une mesure (N1_{A}) du régime N1 et une deuxième voie de mesure de régulation (B), indépendante de la première voie de mesure, adaptée pour obtenir une mesure (N1_{B}) du régime N1, et des moyens de comparaison des mesures de régime obtenues (N1_{A,} N1_{B}) à une consigne de poussée (N1_{cons}) pour fournir un état de poussée (E_{REG}) ; et
- un module d'engagement (ENG) d'une fonction de protection du type anti sur-poussée (UHT) ou anti perte de poussée (ATTCS) de la turbomachine,
la turbomachine comportant en outre un système de protection (2) contre la survitesse pour empêcher l'envoi de débris à haute énergie en dehors de ladite turbomachine, le système de protection (2) comportant au moins une voie de mesure de survitesse (AS, BS) adaptée pour obtenir une survitesse (N1_{AS}, N1_{BS}) du corps rotatif de la turbomachine, turbomachine **caractérisée par le fait qu'**elle comporte des moyens aptes à fournir au moins une mesure de survitesse à partir de la survitesse obtenue (N1_{AS}, N1_{BS}) lorsqu'une des voies de mesures de régulation (A, B) est défectueuse, et que le module d'engagement (ENG) comporte au moins un moyen de comparaison de ladite mesure de survitesse à au moins un régime de référence déterminé en fonction de la fonction de protection à engager, ledit module d'engagement (ENG) étant configuré pour engager ladite fonction de protection anti sur-poussée ou anti perte de poussée en fonction des résultats de la comparaison.

2. Turbomachine selon la revendication 1, dans laquelle le système de protection contre la survitesse (2) comporte une première voie de détection de survitesse (AS) adaptée pour obtenir une survitesse (N1_{As}) du corps rotatif de la turbomachine et une deuxième voie de détection de survitesse (BS), indépendante de la première voie de détection de survitesse (AS), adaptée pour obtenir une survitesse (N1_{Bs}) du corps rotatif de la turbomachine, le module d'engagement comportant des moyens de comparaison des deux survitesses (N1_{AS,} N1_{BS}) obtenues au régime de référence déterminé en fonction de la fonction de protection à engager.

3. Turbomachine selon la revendication 1 dans laquelle le système de protection contre la survitesse (2) comporte une première voie de détection de survitesse (AS) adaptée pour obtenir une survitesse (N1_{As}) du corps rotatif de la turbomachine et une deuxième voie de détection de survitesse (BS), indépendante de la première voie de détection de survitesse (AS), adaptée pour obtenir une survitesse (N1_{Bs}) du corps rotatif de la turbomachine, ce système de protection contre la survitesse (2) étant configuré pour fournir une survitesse consolidée (N1_{S}) au module d'engagement (ENG) du système de surveillance (1) en fonction des survitesses obtenues (N1_{AS,} N1_{BS}) sur les voies de mesure de survitesse (AS, BS) et le module d'engagement comportant des moyens de comparaison de la survitesse consolidée (N1_{S}) au régime de référence déterminé en fonction de la fonction de protection à engager.

4. Turbomachine selon l'une des revendications 1 à 3, dans laquelle, la voie de mesure de survitesse (AS, BS) est indépendante des voies de mesure de régime (A, B).

5. Turbomachine selon l'une des revendications 1 à 4, dans laquelle, pour l'engagement de la fonction anti sur-poussée de la turbomachine, les moyens de comparaison du module d'engagement (ENG) sont configurés pour comparer au moins une survitesse obtenue (N1_{AS,} N1_{BS}) à un régime de sécurité (N_{SEC}) correspondant à la sur-poussée maximale autorisée pour la turbomachine.

6. Turbomachine selon l'une des revendications 1 à 4, comprenant au moins une liaison de communication avec une autre turbomachine similaire pour se communiquer la valeur du régime de leur corps rotatif, turbomachine dans laquelle, pour l'engagement de la fonction anti perte de poussée de ladite turbomachine, les moyens de comparaison du module d'engagement (ENG) sont configurés pour comparer au moins une survitesse obtenue (N1_{AS,} N1_{BS}) de ladite turbomachine au régime de ladite autre turbomachine (Nₘₒₜ₂) obtenue par la liaison de communication.

7. Procédé de surveillance d'une turbomachine d'aéronef comportant au moins un corps rotatif de régime N1, procédé comportant :
- une étape d'obtention d'une première mesure du régime du corps rotatif (N1_{A}) selon une première voie de mesure de régulation (A) d'un système de surveillance du régime N1 et d'au moins une deuxième mesure du régime du corps rotatif (N1_{B}) selon une deuxième voie de mesure de régulation (B) dudit système de surveillance, indépendante de la première voie de mesure ;
- une étape de comparaison des mesures de régime obtenues à une consigne de poussée (N1_{cons}) pour fournir un état de poussée (E_{REG}) ;
- une étape d'obtention d'une première survitesse du corps rotatif (N1_{As}) selon une première voie de détection de survitesse (AS) d'un système de protection (2) contre la survitesse adapté pour empêcher l'envoi de débris à haute énergie en dehors de ladite turbomachine, et d'une seconde survitesse (N1_{Bs}) du corps rotatif de la turbomachine selon une deuxième voie de détection de survitesse (BS) du même système de protection (2), indépendante de la première voie de détection de survitesse (AS) ;
- une étape d'engagement d'une fonction de protection anti sur-poussée ou anti perte de poussée de la turbomachine utilisant les deux valeurs de survitesse obtenues (N1_{AS}, N1_{BS}) pour comparer la mesure de survitesse à au moins un régime de référence déterminé en fonction de la fonction de protection à engager.

8. Procédé de surveillance d'une turbomachine d'aéronef comportant au moins un corps rotatif de régime N1, procédé comportant :
- une étape d'obtention d'une première mesure du régime du corps rotatif (N1_{A}) selon une première voie de mesure de régulation (A) d'un système de surveillance du régime N1 et d'au moins une deuxième mesure du régime du corps rotatif (N1_{B}) selon une deuxième voie de mesure de régulation (B) dudit système de surveillance, indépendante de la première voie de mesure ;
- une étape de comparaison des mesures de régime obtenues à une consigne de poussée (N1_{cons}) pour fournir un état de poussée (E_{REG}) ;
- une étape d'obtention d'une survitesse du corps rotatif (N1_{AS,} N1_{BS}) selon au moins une voie de mesure (AS, BS) de survitesse, indépendante des voies de mesure de régulation (A, B), d'un système de protection (2) contre la survitesse adapté pour empêcher l'envoi de débris à haute énergie en dehors de ladite turbomachine, et
- une étape d'engagement d'une fonction de protection anti sur-poussée ou anti perte de poussée de la turbomachine par comparaison de ladite survitesse obtenue (N1_{AS,} N1_{BS}) à au moins un régime de référence déterminé en fonction de la fonction de protection à engager.

## Patentansprüche

1. Turbomaschine eines Luftfahrzeugs, die mindestens einen Drehkörper mit Drehzahl N1 und ein Überwachungssystem (1) umfasst, welches beinhaltet:
- ein Regelmodul (REG), das mindestens einen ersten Regel-Messkanal (A) umfasst, der dafür ausgebildet ist, eine Messung (N1_{A}) der Drehzahl N1 zu erhalten, und einen vom ersten Messkanal unabhängigen zweiten Regel-Messkanal (B), der dafür ausgebildet ist, eine Messung (N1_{B}) der Drehzahl N1 zu erhalten, und Mittel zum Vergleichen der erhaltenen Drehzahlmessungen (N1_{A}, N1_{B}) mit einem Schub-Sollwert (N1_{cons}), um einen Schubzustand (E_{REG}) zu liefern; und
- ein Modul zum Aktivieren (ENG) einer Schutzfunktion vom Typ Anti-Schubüberschuss (UHT) oder Anti-Schubverlust (ATTCS) der Turbomaschine,
wobei die Turbomaschine weiter ein Schutzsystem (2) gegen die Übergeschwindigkeit umfasst, um das Schleudern von Trümmern mit hoher Energie aus der Turbomaschine heraus zu verhindern, wobei das Schutzsystem (2) mindestens einen Übergeschwindigkeits-Messkanal (AS, BS) umfasst, der dafür ausgebildet ist, eine Übergeschwindigkeit (N1_{AS}, N1_{BS}) des Drehkörpers der Turbomaschine zu erhalten, wobei die Turbomaschine durch die Tatsache gekennzeichnet ist, dass sie Mittel umfasst, die in der Lage sind, mindestens eine Übergeschwindigkeits-Messung anhand der erhaltenen Übergeschwindigkeit (N1_{AS}, N1_{BS}) zu liefern, wenn einer der Regel-Messkanäle (A, B) defekt ist, und dass das Aktivierungsmodul (ENG) mindestens ein Mittel zum Vergleichen der Übergeschwindigkeits-Messung mit mindestens einer in Abhängigkeit von der zu aktivierenden Schutzfunktion bestimmten Referenzdrehzahl umfasst, wobei das Aktivierungsmodul (ENG) dafür konfiguriert ist, die Anti-Schubüberschuss- oder Anti-Schubverlust-Schutzfunktion in Abhängigkeit von den Ergebnissen des Vergleichs zu aktivieren.

2. Turbomaschine nach Anspruch 1, wobei das Schutzsystem gegen die Übergeschwindigkeit (2) einen ersten Übergeschwindigkeits-Detektionskanal (AS) umfasst, der dafür ausgebildet ist, eine Übergeschwindigkeit (N1_{AS}) des Drehkörpers der Turbomaschine zu erhalten, und einen vom ersten Übergeschwindigkeits-Detektionskanal (AS) unabhängigen zweiten Übergeschwindigkeits-Detektionskanal (BS), der dafür ausgebildet ist, eine Übergeschwindigkeit (N1_{BS}) des Drehkörpers der Turbomaschine zu erhalten, wobei das Aktivierungsmodul Mittel zum Vergleichen der zwei erhaltenen Übergeschwindigkeiten (N1_{AS}, N1_{BS}) mit der in Abhängigkeit von der zu aktivierenden Schutzfunktion bestimmten Referenzdrehzahl umfasst.

3. Turbomaschine nach Anspruch 1, wobei das Schutzsystem gegen die Übergeschwindigkeit (2) einen ersten Übergeschwindigkeits-Detektionskanal (AS) umfasst, der dafür ausgebildet ist, eine Übergeschwindigkeit (N1_{AS}) des Drehkörpers der Turbomaschine zu erhalten, und einen vom ersten Übergeschwindigkeits-Detektionskanal (AS) unabhängigen zweiten Übergeschwindigkeits-Detektionskanal (BS), der dafür ausgebildet ist, eine Übergeschwindigkeit (N1_{BS}) des Drehkörpers der Turbomaschine zu erhalten, wobei dieses Schutzsystem gegen die Übergeschwindigkeit (2) dafür konfiguriert ist, dem Aktivierungsmodul (ENG) des Überwachungssystems (1) eine konsolidierte Übergeschwindigkeit (N1_{S}) in Abhängigkeit von den über die Übergeschwindigkeits-Messkanäle (AS, BS) erhaltenen Übergeschwindigkeiten (N1_{AS}, N1_{BS}) zu liefern, und wobei das Aktivierungsmodul Mittel zum Vergleichen der konsolidierten Übergeschwindigkeit (N1_{S}) mit dem in Abhängigkeit von der zu aktivierenden Schutzfunktion bestimmten Referenzdrehzahl umfasst.

4. Turbomaschine nach einem der Ansprüche 1 bis 3, wobei der Übergeschwindigkeits-Messkanal (AS, BS) von den Drehzahl-Messkanälen (A, B) unabhängig ist.

5. Turbomaschine nach einem der Ansprüche 1 bis 4, wobei für das Aktivieren der Anti-Schubüberschuss-Funktion der Turbomaschine die Vergleichsmittel des Aktivierungsmoduls (ENG) dafür konfiguriert sind, mindestens eine erhaltene Übergeschwindigkeit (N1_{AS}, N1_{BS}) mit einer Sicherheitsdrehzahl (N_{SEC}) zu vergleichen, die dem maximal zulässigen Schubüberschuss für die Turbomaschine entspricht.

6. Turbomaschine nach einem der Ansprüche 1 bis 4, die mindestens eine Kommunikationsverbindung mit einer anderen, ähnlichen Turbomaschine beinhaltet, um sich den Wert der Drehzahl ihres Drehkörpers zu kommunizieren, wobei in der Turbomaschine für das Aktivieren der Anti-Schubverlust-Funktion der Turbomaschine die Vergleichsmittel des Aktivierungsmoduls (ENG) dafür konfiguriert sind, mindestens eine von der Turbomaschine erhaltene Übergeschwindigkeit (N1_{AS}, N1_{BS}) mit der über die Kommunikationsverbindung erhaltenen Drehzahl der anderen Turbomaschine (Nₘₒₜ₂) zu vergleichen.

7. Verfahren zum Überwachen einer Turbomaschine eines Luftfahrzeugs, die mindestens einen Drehkörper mit Drehzahl N1 umfasst, wobei das Verfahren umfasst:
- einen Schritt des Erhaltens einer ersten Messung der Drehzahl des Drehkörpers (N1_{A}) gemäß einem ersten Regel-Messkanal (A) eines Systems zum Überwachen der Drehzahl N1, und mindestens einer zweiten Messung der Drehzahl des Drehkörpers (N1_{B}) gemäß einem zweiten Regel-Messkanal (B) des Überwachungssystems, der vom ersten Messkanal unabhängig ist;
- einen Schritt des Vergleichens der erhaltenen DrehzahlMessungen mit einem Schubsollwert (N1_{cons}), um einen Schubzustand (E_{REG}) zu liefern;
- einen Schritt des Erhaltens einer ersten Übergeschwindigkeit des Drehkörpers (N1_{AS}) gemäß einem ersten Übergeschwindigkeits-Detektionskanal (AS) eines Schutzsystems (2) gegen die Übergeschwindigkeit, das dafür ausgebildet ist, das Schleudern von Trümmern mit hoher Energie aus der Turbomaschine heraus zu verhindern, und einer zweiten Übergeschwindigkeit (N1_{BS}) des Drehkörpers der Turbomaschine gemäß einem zweiten Übergeschwindigkeits-Detektionskanal (BS) desselben Schutzsystems (2), der vom ersten Übergeschwindigkeits-Detektionskanal (AS) unabhängig ist;
- einen Schritt des Aktivierens einer Anti-Schubüberschuss- oder Anti-Schubverlust-Schutzfunktion der Turbomaschine unter Verwendung der zwei erhaltenen Übergeschwindigkeitswerte (N1_{AS}, N1_{BS}), um die Übergeschwindigkeits-Messung mit mindestens einer in Abhängigkeit von der zu aktivierenden Schutzfunktion bestimmten Referenzdrehzahl zu vergleichen.

8. Verfahren zum Überwachen einer Turbomaschine eines Luftfahrzeugs, die mindestens einen Drehkörper mit Drehzahl N1 umfasst, wobei das Verfahren umfasst:
- einen Schritt des Erhaltens einer ersten Messung der Drehzahl des Drehkörpers (N1_{A}) gemäß einem ersten Regel-Messkanal (A) eines Systems zum Überwachen der Drehzahl N1, und mindestens einer zweiten Messung der Drehzahl des Drehkörpers (N1_{B}) gemäß einem zweiten Regel-Messkanal (B) des Überwachungssystems, der vom ersten Messkanal unabhängig ist;
- einen Schritt des Vergleichens der erhaltenen DrehzahlMessungen mit einem Schubsollwert (N1_{cons}), um einen Schubzustand (E_{REG}) zu liefern;
- einen Schritt des Erhaltens einer Übergeschwindigkeit des Drehkörpers (N1_{AS}, N1_{BS}) gemäß mindestens einem von den Regel-Messkanälen (A, B) unabhängigen Übergeschwindigkeits-Messkanal (AS, BS) eines Schutzsystems (2) gegen die Übergeschwindigkeit, das dafür ausgebildet ist, das Schleudern von Trümmern mit hoher Energie aus der Turbomaschine heraus zu verhindern, und
- einen Schritt des Aktivierens einer Anti-Schubüberschuss- oder Anti-Schubverlust-Schutzfunktion der Turbomaschine durch Vergleichen der erhaltenen Übergeschwindigkeit (N1_{AS}, N1_{BS}) mit mindestens einer in Abhängigkeit von der zu aktivierenden Schutzfunktion bestimmten Referenzdrehzahl.

## Claims

1. Aircraft turbine engine comprising at least one spool rotating at speed N1 and a monitoring system (1) comprising:
- a regulating module (REG) comprises a first regulation measurement channel (A) suitable for obtaining a measurement (N1_{A}) of the speed N1 and a second regulation measurement channel (B), independent of the first measurement channel, suitable for obtaining a measurement (N1_{B}) of the speed N1, and means for comparing the obtained speed measurements (N1_{A}, N1_{B}) with a thrust setpoint (N1_{cons}) to provide a thrust status (E_{REG}); and
- a module (ENG) for engaging protection functions of the anti overthrust type or anti loss of thrust type of the turbine engine,
the turbine engine also comprising a protection system (2) against overspeed in order to prevent the ejection of high-energy debris from being expelled out of said turbine engine, the protection system (2) comprising at least one overspeed measurement channel (AS, BS) suitable for obtaining an overspeed (N1_{AS}, N1_{BS}) of the rotating spool of the turbine engine, the turbine engine being **characterised in that** it comprises means capable of providing at least one measurement of overspeed on the basis of the overspeed obtained (N1_{AS}, N1_{BS}) when one of the regulation measurement channels (A, B) is defective, and **in that** the engagement module (ENG) comprises at least one means for comparison of said overspeed measurement to at least one reference speed defined according to the protection function to be engaged, said engagement module (ENG) being configured in order to engage said anti overthrust or anti loss of thrust protection function based on the results of the comparison.

2. Turbine engine according to claim 1, wherein the overspeed protection system (2) comprises a first overspeed detection channel (AS) suitable for obtaining an overspeed (N1_{As}) of the rotating spool of the turbine engine and a second overspeed detection channel (BS), independent of the first overspeed detection channel (AS), suitable for obtaining an overspeed (N1_{Bs}) of the rotating spool of the turbine engine, the engagement module comprising means for comparison of the two overspeeds (N1_{AS}, N1_{BS}) obtained to the reference speed determined on the basis of the protection function to be engaged.

3. Turbine engine according to claim 1, wherein the overspeed protection system (2) comprises a first overspeed detection channel (AS) suitable for obtaining an overspeed (N1_{As}) of the rotating spool of the turbine engine and a second overspeed detection channel (BS), independent of the first overspeed detection channel (AS), suitable for obtaining an overspeed (N1_{Bs}) of the rotating spool of the turbine engine, said system for protection against overspeed (2) being configured to supply a consolidated overspeed (N1_{S}) to the engagement module (ENG) of the monitoring system (1) based on the overspeeds obtained (N1_{AS}, N1_{BS}) on the measurement channels (AS, BS) and the engagement module comprising means to compare the consolidated overspeed (N1_{S}) obtained to the reference speed determined on the basis of the protection function to be engaged.

4. Turbine engine according to any of claims 1 to 3, wherein the overspeed measurement channel (AS, BS) is independent of the speed measurement channels (A, B).

5. Turbine engine according to any of claims 1 to 4, wherein for the engagement of the anti overthrust function of the turbine engine, the comparison means of the engagement module (ENG) are configured to compare at least one overspeed obtained (N1_{AS}, N1_{BS}) to a safety speed (N_{SEC}) corresponding to the maximum permitted overthrust for the turbine engine.

6. Turbine engine according to any of claims 1 to 4, comprising at least one communication link with another similar turbine engine in order to communicate to each other the value of the speed of their rotating spool, a turbine engine in which for the engagement of the anti loss of thrust function of said turbine engine, the comparison means of the engagement module (ENG) are configured to compare at least one obtained overspeed (N1_{AS}, N1_{BS}) of said turbine engine to the speed of said other turbine engine (Nₘₒₜ₂) obtained by the communication link.

7. Method for monitoring an aircraft turbine engine comprising at least one spool rotating at speed N1, said method comprising:
- a step of obtaining a first measurement of the speed of the rotating spool (N1_{A}) according to a first regulation measurement channel (A) of a monitoring system of the speed N1 and at least a second measurement of the speed of the rotating spool (N1_{B}) according to a second regulation measurement channel (B) of said monitoring system, independent of the first measurement channel;
- a step of comparison of said measurement of speed obtained to a thrust setpoint (N1_{cons}) in order to supply a thrust status (E_{REG});
- a step of obtaining a first overspeed of the rotating spool (N1_{As}) according to a first overspeed detection channel (AS) of an overspeed protection system (2) configured to preventing high-energy debris from being expelled out of said turbine engine, and a second overspeed (N1_{Bs}) of the rotating spool of the turbine engine according to a second overspeed detection channel (BS) of the same protection system (2), independent of the first overspeed detection channel (AS);
- a step of engagement of an anti overthrust or anti loss of thrust protection function of the turbine engine using the two overspeed values obtained (N1_{AS}, N1_{BS}) in order to compare the overspeed measurement with at least one reference speed defined according to the protection function to be engaged.

8. Method for monitoring an aircraft turbine engine comprising at least one spool rotating at speed N1, said method comprising:
- a step of obtaining a first measurement of the speed of the rotating spool (N1_{A}) according to a first regulation measurement channel (A) of a monitoring system of the speed N1 and at least a second measurement of the speed of the rotating spool (N1_{B}) according to a second regulation measurement channel (B) of said monitoring system, independent of the first measurement channel;
- a step of comparison of the speed measurements obtained to a thrust setpoint (N1_{cons}) in order to supply a thrust status (E_{REG});
- a step of obtaining an overspeed of the rotating spool (N1_{AS}, N1_{BS}) according to at least a first overspeed measurement channel (AS, BS), independent of the regulation measurement channels (A, B), of an overspeed protection system (2) confiugured to prevent high-energy debris from being expelled out of said turbine engine, and
- a step of engagement of an anti overthrust or anti loss of thrust protection function of the turbine engine by comparison of said overspeed obtained (N1_{AS}, N1_{BS}) with at least one reference speed defined according to the protection function to be engaged.
